# EUROPEAN PATENT SPECIFICATION

(11) **EP 2 655 276 B1**
(45) Date of publication and mention of the grant of the patent: **18.09.2019**
(21) Application number: 10860973.6
(22) Date of filing: 22.12.2010
(51) Int. Cl.: C03C 3/087, C03C 13/00, C08J 5/08

(54) **HIGH STRENGTH GLASS COMPOSITION AND FIBERS**
HOCHFESTE GLASZUSAMMENSETZUNG UND FASERN
COMPOSITION ET FIBRES DE VERRE À RÉSISTANCE ÉLEVÉE

(43) Date of publication of application: 30.10.2013
(73) Proprietor: AGY Holding Corporation, Aiken, South Carolina 29801 (US)
(72) Inventor: HAUSRATH, Robert, Aiken South Carolina 29803 (US); LONGOBARDO, Anthony, Johnston South Carolina 29832 (US)
(74) Representative: Goodman, Simon John Nye
(86) International application number: PCT/US2010/061810
(87) International publication number: WO 2012/087313

(56) References cited:
- EP-A1- 2 450 321
- EP-A1- 2 581 350
- FR-A1- 2 930 543
- JP-A- S57 191 251
- JP-A- 2003 171 143
- KR-A- 20000 076 068
- KR-A- 20060 017 862
- KR-A- 20070 074 607
- KR-A- 20080 073 715
- US-A1- 2006 204 763
- US-A1- 2010 129 944
- US-A1- 2010 162 772
- US-B2- 7 799 713
- @bullet ET AL: "TECHNICAL PAPER @BULLET Table 3 Properties of Glass Fibers -- Chemical, Electrical and Thermal Properties . . .8 @BULLET Table 4 Glass Fiber Size Chemistry Summary9 @BULLET Table 5 S-2 Glass Fiber Unidirectional Epoxy Composite Properties .9 @BULLET Figure 1 Continuous Glass Fiber Manufacturing Pr", , 1 February 2006 (2006-02-01), XP055263163, Retrieved from the Internet: URL:http://www.agy.com/wp-content/uploads/ 2014/03/High_Strength_Glass_Fibers-Technic al.pdf [retrieved on 2016-04-06]

## Description

### Technical Field

The present disclosure is generally directed to glass compositions, suitable for use in continuous manufacturing of high strength glass fibers, and specifically, fibers formed from the composition and composites thereof.

### BACKGROUND

Currently there are a number of glass families designed for high strength and high modulus that are at least capable of forming fibers. For example, R-Glass and S-Glass are examples of such glass families, both of which have higher strength than boron-containing E-Glass. R-Glass is considered a high strength, high modulus glasses that is formable into fibers and useful in aerospace composite applications. R-Glass is typically composed of silicon oxide, aluminum oxide, magnesium oxide, and calcium oxide.

S-Glass is typically composed of silicon oxide, aluminum oxide and magnesium oxide (ASTM International (D578-05)). S-glass fibers have a slightly higher mechanical strength, in part from its higher silica content and less calcium oxide content than R-Glass fibers. The chemical composition of the S-glass family also provides for high strength glass fiber useful in high strength applications, such as ballistic armor. Deutsches Institut für Normung (DIN) classifies S-Glass as an aluminosilicate glass (e.g., mostly aluminum trioxide and silicon dioxide) and having MgO at about 10% by weight (DIN 1259-1) without added CaO.

One drawback to the R-Glass and S-Glass families is that they require higher melting and processing temperatures during fiber forming than that of E-Glass, which requires that R-Glass and S-Glass be generally manufactured by melting the constituents of the compositions in specialized melter such as a platinum lined melter, thus raising the production costs of forming R-Glass and S-Glass fibers compared to E-Glass fibers. In addition, higher processing temperatures reduce the life of the fiber bushings, which are expensive to replace. Ideally, a continuous fiberization process utilizing a refractory lined melter and low fiber bushing temperatures would be desirable in combination with a high-strength glass composition.

FR 2930543 discloses glass fibres, which according to its example in Table 1 have a glass composition in weight percent: SiO₂ 60,50; Al₂O₃ 19,90; CaO 7,70; MgO 9,50; Na₂O 0,20; K₂O 0,50; Li₂O 1,40; TiO₂ 0,13.

EP 2450321 A1 discloses a glass fibre composition, at example N05#, having in weight percent: SiO₂ 59.5; Al₂O₃ 17.0; CaO 10.5; MgO 9.3; Li₂O 0.45; Na₂+K₂O 0.40; TiO₂ 1.2; Fe₂O₃ 0.32.

### SUMMARY

The invention provides a glass composition, glass fibers, a process for providing glass fibers and a fiberglass reinforced article as defined in the appended independent claims, to which reference should now be made. Preferred or advantageous features of the invention are set out in dependent subclaims.

Glass compositions for the formation of continuous glass fibers that are suitable for use in high-strength applications and that are capable of being economically formed into glass fibers using low-cost, direct melting furnaces, may thus be provided. The instant glass compositions exhibit low melting and fiberizing temperatures suitable for refractory-lined furnaces. The instant glass compositions combine these processing benefits with strength characteristics of higher-priced, more process restrictive glass fibers such as S-Glass and R-Glass.

Thus, in one embodiment, a composition comprising between 56 to 61 weight percent SiO₂; between 16 to 23 weight percent Al₂O₃ wherein the weight percent ratio of SiO₂/ Al₂O₃ is between 2 to 4; between 8.5 to 11.5 weight percent MgO; between 6 to 10 weight percent CaO, wherein the weight percent ratio of MgO/CaO is between 0.7 to 1.5; between 0.7 to 2 weight percent Na₂O; less than 1 weight percent Li₂O; and total residual transition metal oxides of less than 2 weight percent, is provided. Glass fibers formed from the composition are also provided.

In one aspect, the glass composition comprises between 57.5 to 60.5 weight percent SiO₂; between 17.3 to 21.5 weight percent Al₂O₃ wherein the weight percent ratio of SiO₂/Al₂O₃ is between 2.7 to 3.5; between 9.0 to 11.3 weight percent MgO; between 7.5 to 9.7 weight percent CaO, wherein the weight percent ratio of MgO/CaO is between 1.0 to 1.2; between 0.7 to 2 weight percent Na₂O; less than 0.5 weight percent Li₂O; and total residual transition metal oxides of less than 2 weight percent. Glass fibers formed from the composition are also provided.

In another aspect, the weight percent of the four most abundant oxides present in the glass composition or fiber can be expressed as follows: 57 ≤ SiO₂ ≤ 60; 17 ≤ Al₂O≤ 22; 8 ≤ MgO ≤ 12; 7 ≤ CaO ≤ 10; 1 ≤ Na₂O ≤ 2; and wherein the glass composition or fiber has the following oxide ratios: 2.7 ≤ SiO₂/Al₂O₃ ≤ 3.5 by weight percent present, and 0.8 ≤ MgO/CaO ≤ 1.2 by weight percent.

In another embodiment, a process for providing continuous, manufacturable, high modulus glass fibers in a glass melter is provided. The process comprises the steps of providing a composition to a melting zone of a glass melter, the composition comprising between 56 to 61 weight percent SiO₂; between 16 to 23 weight percent Al₂O₃, wherein the weight percent ratio of SiO₂/Al₂O₃ is between 2 to 4; between 8 to 12 weight percent MgO; between 6 to 10 weight percent CaO, wherein the weight percent ratio of MgO/CaO is between 0.7 to 1.5; between 0.7 to 2 weight percent Na₂O; less than 1 weight percent Li₂O; and total residual transition metal oxides of less than 2 weight percent; and heating the composition to a forming temperature in excess of the liquidus temperature of a resulting glass to form a fiberizable molten glass and continuously fiberizing said molten glass, whereby a manufacturable high modulus glass fiberization process is sustained.

In another embodiment, a fiberglass reinforced article is provided. The article comprises glass fibers of the composition described above and an organic, inorganic, or organic-inorganic matrix material.

### DETAILED DESCRIPTION

The glasses disclosed and described herein are suitable for melting in traditional commercially available refractory-lined glass furnaces, which are widely used in the manufacture of glass reinforcement fibers. The mechanical properties and the effectiveness of composite parts are enhanced by improving the mechanical performance of glass fibers, especially the Young's modulus of the fibers.

As used herein, the term "liquidus" is given its ordinary and customary meaning, generally inclusive of the highest temperature at which equilibrium exists between liquid glass and its primary crystalline phase, whereas at all temperatures above the liquidus, the glass melt is free from crystals in its primary phase and at temperatures below the liquidus, crystals may form in the melt.

As used herein, the term "delta-T (ΔT)" is given its ordinary and customary meaning, generally inclusive of the difference between the fiberizing temperature and the liquidus, and thus, a fiberizing property of the glass composition. The larger the delta-T, the greater degree of process flexibility during the formation of glass fibers and the less likely devitrification (formation of crystals within the melt) of the glass melt will occur during melting and fiberizing. Typically, the greater the delta-T, the lower the production cost of the glass fibers, in part by extending bushing life and by providing a wider fiber-forming process window.

As used herein, the phrase "essentially lithium free" refers to a composition whereas lithium oxides and or their precursors are not intentionally added to the composition, however trace amounts of lithium is tolerable, preferably less than 1 weight percent, more preferably less than 0.75 percent, even more preferably less than 0.5 percent. In one aspect, trace amounts of lithium is less than 0.25 weight percent.

As used herein, the phrase "essentially potassium free" refers to a composition where potassium oxides are not intentionally added to the composition, however trace amounts of potassium is tolerable, preferably less than 1 weight percent, more preferably less than 0.75 percent, even more preferably less than 0.5 percent. In one aspect, trace amounts of potassium is less than 0.25 weight percent. The phrase "essentially free," with reference to other oxides or substances, should be given the same meaning.

In one aspect, when the silicon dioxide in the composition for forming fibers is less than 56 weight percent, when the other components of the composition are taken into account, the viscosity of the glass becomes too low and there is an increased risk of devitrification during fiberizing. Above 61%, the glass becomes more viscous and more difficult to melt and fiberize. In embodiments of the invention, the silica content is between 56 and 60.5 weight percent.

In one aspect, reducing the percentage concentration of aluminum oxide in the composition for forming fibers, when the other components of the composition are taken into account, to below 17 weight percent results in a reduction in the modulus, whereas too large an increase in the percentage concentration of aluminum oxide, e.g., to above 22 weight percent, may cause devitrification and melt viscosity increases. In embodiments of the invention, therefore, the alumina content of the instant compositions is between 17.3 to 23 weight percent.

Advantageously, the ratio of the weight percent of the silica and alumina oxides (SiO₂/Al₂O₃) is between 2 to 4, preferably between 2.7 and 3.5 in the composition for forming fibers, which makes it possible to achieve high modulus fibers, when the other components of the composition are taken into account.

Magnesia or magnesium oxide (MgO) is present in the instant composition and provides a viscosity reducing effect as well as improving the modulus of the glass. The weight percent of MgO in the composition for forming fibers is between 8 to 12, more preferably between 9 and 11.3 weight percent, when the other components of the composition are taken into account.

Calcium oxide (CaO) is also present in the instant composition and is used to adjust the viscosity and to control the devitrification of the glasses composition during processing, among other things. The preferred weight percent of CaO in the composition for forming fibers is between 7 and 10 weight percent, preferably between 7.8 to 9.7, when the other components of the composition are taken into account, such as the amount of magnesium oxide. The CaO/MgO weight ratio has an influence on the modulus and on the liquidus temperature of the glass, and therefore, for a given alumina content, preferably, the MgO/CaO ratio varies from 0.7 to 1.5, more preferably, between 1 to 1.2.

The composition of the glass for providing high modulus fibers therefore, is at least in part, based on the relationship of SiO₂/Al₂O₃ and the MgO/CaO in weight percent. In one aspect, the combination of these parameters makes it possible to obtain high Young modulus values of 90 GPa or more and greater than 85 GPa for impregnated strand tensile modulus, for example, while still having good fiberizability. In certain aspects, the combination of these parameters makes it possible to obtain Young modulus values of 92 GPa or more and about 90 GPa for impregnated strand tensile modulus.

Other alkaline-earth metal oxides, for example BaO and SrO, may be present in the glass composition as trace impurities, that is, they are not intentionally added, and thus, the total content of these oxides is kept below 2 weight percent, preferably below 1weight percent, so as not to increase the density of the glass, which would have the effect of lowering the specific Young's modulus. Preferably, the composition contains essentially no BaO and SrO.

Lithium oxide (Li₂O) is generally believed to be essential for obtaining a high specific Young's modulus of glass fibers, where it has been reported to provide a substantial reduction in the working temperature at amounts above 3 weight percent, but at amounts below 1 weight percent, the reduction in working temperature is insufficient for fiberization. However, it has been found by Applicants that with the appropriate selection of oxides of silicon, aluminum, magnesium, calcium and sodium, that the instant compositions and fibers provide a high modulus glass can be obtained with essentially no lithium oxide added. Thus, the instant compositions and glass fibers preferably are essentially lithium free.

Boron oxide (B₂O₃) in the instant glass composition is present in a weight percent of less than 1%, preferably 0.5%. Boron is not intentionally added to the instant compositions. Any boron present in the final glass fibers will have come from raw material impurities. Thus, in one aspect, the instant compositions and glass fibers preferably are essentially boron free.

Titanium oxide acts as a viscosity reducer and helps to increase the specific Young's modulus. It may be present as an impurity (its content in the composition is then from 0 to 1%) or it may be intentionally added. TiO₂, if present, typically comes as an impurity in conventional raw materials, which are the preferred raw materials for a standard refractory furnace. Its intentional addition requires the use of non-conventional raw materials that are more expensive. Preferably, the TiO₂ content is less than 1 weight percent.

In one aspect, Na₂O is added to the glass composition herein disclosed in order to limit devitrification and reduce the viscosity of the glass. Preferably, the weight percent of Na₂O is between 0.7 to 1.2. In one aspect, the instant glass composition is comprised of only appreciable amounts of a single alkali metal oxide (e.g., essentially no mixed alkali metal oxides, such as both Na₂O and K₂O being present, for example).

Fluorine (F₂) may be present in the composition in order to help in glass melting and in fiberizing. However, its content is limited to 0 to 1 weight percent. Preferably, the instant composition is essentially free of fluoride.

Transition metal oxides (e.g., Fe₂O₃, zirconium oxide, and chromium oxide forms) are generally present as impurities in the instant composition or added at low levels as processing aids. In one aspect, the total weight percent of transition metal oxide added to the instant composition is preferably below 2, preferably less than 1. These transition metal oxides are impurities in the raw materials that can be present in small amounts but are not intentionally added to the instant composition.

In one aspect, the glass is essentially free of any additional components other than silicon dioxide, aluminum oxide, magnesium oxide, calcium oxide, and sodium oxide, with a total amount of TiO₂, Fe₂O₃, B₂O₃, and MnO being less than 2 weight percent, with any other material present in an amount that would not materially affect the novel characteristics of the instant composition, such as its manufacturability and high strength and modulus.

### Manufacturing

The disclosed and described processes relates to glass fibers, which can be obtained by mechanically attenuating streams of molten glass that flow out of orifices located in the base of a bushing, which is heated by resistance heating or other means. These glass fibers are intended especially for the production of meshes and fabrics used in composites having an organic and/or inorganic matrix.

The glasses disclosed and described herein are suitable for melting in traditional commercially available refractory-lined glass melters that are widely used in the manufacture of glass reinforcement fibers, in what is commonly called a direct-melt process. This is contrasted to prior art formulations, which were melted in a platinum lined melting container, since those prior art formulations typically do not have properties which are compatible with direct-melt processes.

The glass batch disclosed and described herein is melted, in some instances using a glass melting furnace made from appropriate refractory materials such as alumina, chromic oxide, silica, alumina-silica, zircon, zirconia-alumina-silica, or similar oxide based refractory materials. Often, such glass melting furnaces include one more bubblers and/or electrical boost electrodes. The bubblers and/or electrical boost electrodes increase the temperature of the bulk glass and increase the molten glass circulation under the batch cover.

Thus, the melted glass composition disclosed herein is delivered to a bushing assembly from a forehearth. The bushing includes a tip plate with a plurality of nozzles, each nozzle discharges a stream of molten glass, which are mechanically drawn to form continuous filaments.

Thus, glass fibers according to the instant disclosure are obtainable from the glasses of the composition described as above to provide a large number of streams of molten glass flowing out of a large number of orifices located in the base of one or more bushings that are attenuated into the form of one or more groups of continuous filaments and then these strands are combined into one or more fibers, which are collected on a moving support. This may be a rotating support, when the fibers are collected in the form of wound packages, or in the form of a support that moves translationally when the fibers are chopped by a device that also serves to draw them or when the fibers are sprayed by a device serving to draw them, so as to form a mat.

Having generally described this instant disclosure, a further understanding can be obtained by reference to certain specific examples illustrated below which are provided for purposes of illustration only and are not intended to be all inclusive or limiting unless otherwise specified.

### EXAMPLES

The exemplary glasses listed in Tables 1-2 were prepared by melting in platinum crucibles or in a refractory melter. Mechanical and physical properties of the glass and fibers produced were measured. The units of measurement for the physical properties are: Liquidus temperature (°C) and delta-T (°C). Density (g/cm³) and Young's Modulus (GPa) were measured for representative glass samples, and in some cases, pristine fiber tensile strength (MPa) was also measured.

Fiberizing temperature was measured using a rotating spindle viscometer at a fiberizing viscosity of 1000 Poise denoted by T₃. The temperature at which glass viscosity is 100 poise (T₂) was also similarly measured. Typically, the glass temperature in a melter is between T₂ and T₃. Liquidus temperature was measured by placing a platinum container filled with glass in a thermal gradient furnace for about 24 hours. The greatest temperature at which crystals were present was considered the liquidus temperature denoted by T_{liquidus}. Young's modulus was measured using a sonic technique on an annealed bulk glass sample. Tensile strength was measured on a pristine single fiber.

The following examples illustrate the exemplary fibers without limitation.

Glass fibers made up of glass filaments of about 10 micron in diameter were obtained by attenuating molten glass having the composition given in Tables 1-2, expressed in percentages by weight or ratios of percent by weight. Comparative examples 11 and 12 have compositions having an amount of MgO that is less than that of CaO (MgO/CaO <1) that provided the lowest delta-T values and highest liquidus temperatures of the instant compositions.

**TABLE 1.**

| | **Example** | | | | | |
|---|---|---|---|---|---|---|
| **Composition** | **1** | **2** | **3** | **4** | **5** | **6** |
| SiO₂ | 59.87 | 59.86 | 59.85 | 59.85 | 58.62 | 58.61 |
| Al₂O₃ | 21.53 | 19.95 | 18.53 | 17.35 | 21.20 | 21.20 |
| MgO | 9.08 | 9.93 | 10.67 | 11.31 | 10.14 | 9.92 |
| CaO | 7.80 | 8.53 | 9.19 | 9.73 | 8.74 | 8.54 |
| Na₂O | 1.50 | 1.50 | 1.50 | 1.50 | 1.07 | 1.50 |
| TiO₂ | 0.03 | 0.03 | 0.03 | 0.03 | 0.03 | 0.03 |
| Fe₂O₃ | 0.16 | 0.17 | 0.18 | 0.19 | 0.18 | 0.17 |
| SiO₂/Al₂O₃ | 2.78 | 3.00 | 3.23 | 3.45 | 2.77 | 2.76 |
| MgO/CaO | 1.16 | 1.16 | 1.16 | 1.16 | 1.16 | 1.16 |
| T₂(°C) | 1577 | 1546 | 1520 | 1501 | 1524 | 1529 |
| T₃(°C) | 1372 | 1345 | 1320 | 1305 | 1333 | 1334 |
| T_{liquidus} (°C) | 1260 | 1241 | 1240 | 1252 | 1257 | 1264 |
| ΔT (°C) | 112 | 104 | 80 | 53 | 76 | 70 |
| Density (g/cm³) | 2.57 | 2.58 | 2.60 | 2.61 | 2.60 | 2.60 |
| Young's modulus (GPa) | 92.4 | 93.2 | 94.5 | 94.9 | 94.9 | 94.6 |
| Pristine tensile strength (MPa) | - | - | - | - | 4536 | - |

**TABLE 2.**

| | **Examples** | | | | | | |
|---|---|---|---|---|---|---|---|
| **Composition** | **7** | **8** | **9** | **10** | **11** | **12** | **Comparative Example 1** |
| SiO₂ | 58.61 | 58.30 | 58.02 | 57.95 | 58.61 | 58.05 | 60.0 |
| Al₂O₃ | 21.19 | 21.08 | 21.01 | 20.97 | 21.19 | 20.99 | 25.0 |
| MgO | 9.44 | 10.14 | 10.05 | 10.03 | 8.73 | 7.83 | 6.0 |
| CaO | 9.44 | 8.74 | 8.69 | 8.64 | 10.13 | 10.92 | 9.0 |
| Na₂O | 1.07 | 1.50 | 1.07 | 1.07 | 1.07 | 1.07 | - |
| TiO₂ | 0.03 | 0.03 | 0.83 | 0.83 | 0.03 | 0.83 | - |
| Fe₂O₃ | 0.19 | 0.18 | 0.32 | 0.47 | 0.20 | 0.31 | - |
| SiO₂/Al₂O₃ | 2.77 | 2.77 | 2.76 | 2.76 | 2.77 | 2.77 | 2.4 |
| MgO/CaO | 1.00 | 1.16 | 1.16 | 1.16 | 0.86 | 0.72 | 0.67 |
| T₂(°C) | 1531 | 1524 | 1512 | - | 1538 | 1533 | - |
| T₃(°C) | 1338 | 1330 | 1326 | - | 1344 | 1341 | 1410 |
| T_{liquidus} (°C) | 1268 | 1265 | 1250 | - | 1291 | 1298 | 1330 |
| ΔT (°C) | 70 | 65 | 76 | - | 53 | 43 | 80 |
| Density (g/cm³) | 2.59 | 2.59 | 2.60 | - | 2.59 | 2.60 | 2.56 |
| Young's modulus (GPa) | 94.3 | 94.2 | 95.1 | - | 93.8 | 93.0 | 94.1 |
| Pristine tensile strength (MPa) | - | - | - | - | - | - | 4764 |

Tables 1-2 show that the instant examples exhibit an excellent balance between melting and fiberizing properties and mechanical properties. These fiberizing properties are particularly advantageous for processing fibers, at least in part in view of the liquidus temperatures (about 1240°C to 1270°C), which are lower than that of R-glass (Comparative Example 1) and S-glass. The fiberizing window (ΔT) of all Examples is positive and substantial, and is equal to or greater than 60°C (Example 9), 70°C or greater (Examples 5-8, 10) or 80°C (Example 3) or greater than 100 °C (Examples 1-2).

The properties of the glass reinforcement fibers (discussed below) are mainly governed by the composition of their constituent glass. The instant glass compositions provide fibers having substantially comparable mechanical properties, especially Young's modulus, than those of R-glass, while appreciably lowering the fiberizing temperature. The fibers disclosed and described herein have superior modulus and strength characteristics that are imparted to composites. The instant glass fiber examples 1-12 of Tables 1 and 2 have a measured modulus of between about 92 to about 95 GPa. The measured strength of an exemplary instant glass fiber (Example 5) was found to be about 657 KPsi (4536 MPa). Compared to R-Glass (Comparative Example 1), for example, the instant glass fibers have a lower T₃ yet possess excellent modulus and strength.

As apparent from the above examples, glass fiber compositions of the instant disclosure have advantageous properties, such as low fiberizing temperatures and wide differences between the liquidus temperatures and the fiberizing temperatures (high delta-T values). Other advantages and obvious modifications of the instant disclosure will be apparent to the artisan from the above description and further through practice of the instant disclosure. The high-performance glass disclosed and described herein melts and refines at relatively low temperatures, has a workable viscosity over a wide range of relatively low temperatures, and a low liquidus temperature range.

The above exemplary inventive compositions do not always total 100% of the listed components due to statistical conventions (such as, rounding and averaging) and the fact that some compositions may include impurities that are not listed. Of course, the actual amounts of all components, including any impurities, in a composition always total 100%. Furthermore, it should be understood that where small quantities of components are specified in the compositions, for example, quantities on the order of about 1 weight percent or less, those components may be present in the form of trace impurities present in the raw materials, rather than intentionally added.

Additionally, components may be added to the batch composition, for example, to facilitate processing, that are later eliminated, thereby forming a glass composition that is essentially free of such components. Thus, for instance, minute quantities of components such as fluorine and sulfate may be present as trace impurities in the raw materials providing the silica, calcia, alumina, and magnesia components in commercial practice of the instant disclosure or they may be processing aids that are essentially removed during manufacture.

### Composites

The instant disclosure also includes a composite comprising the aforementioned glass fibers formed from the compositions, as described above. Thus, a composite, comprising the glass fibers as described above in combination with a curable matrix material, is provided. In one aspect, the composite is configured for applications where high strength and stiffness and low weight are desired and/or required. Applications suitable for the instant composite comprising the glass fibers as described above in combination with an organic, inorganic, or organic-inorganic matrix material, include, for example, civilian and military transportation (e.g., aerospace vehicles, military combat and tactical vehicles, civilian personal and public transportation vehicles, etc., wind energy (such as wind turbine blades), reinforcements for the construction industry (cement boards), window screening, etc.), and the like. In other aspects, the glass fibers as described above in combination with an organic, inorganic, or organic-inorganic matrix material are applicable for any application where a light weight, stiff and high strength composite article is desired.

Suitable curable matrix materials include thermoset and thermoplastic resins. By way of example, suitable organic, inorganic, or organic-inorganic matrix materials include cements, ceramics, natural and synthetic rubbers, vinyl esters, polyesters, epoxy resin, polyurethanes, acrylic resins, and combinations or copolymers thereof. The organic matrix can be a thermoplastic or a thermoset material. Composite articles comprising the instant invention can be manufactured using any suitable composite fabrication technique, for example vacuum-assisted resin infusion or pre-impregnated reinforcement lay-up, resin transfer molding, compression molding, pultrusion, etc.

In one aspect of the instant disclosure, after the glass filaments are pulled and attenuated, sizing is applied, using conventional techniques. After the sizing is applied, the resulting fibers are collected into a roving, which is then wound into a package, e.g., using a conventional winder. In one aspect, the sizing composition is particularly suited for the high-temperature glass fibers, providing protection from abrasion during processing and to help facilitate the wetting of the coated fibers by a liquid material which will cure or set to form a solid resinous matrix in which the fibers are embedded as reinforcing elements, preferably enhancing the coupling between the cured resinous matrix and the glass fibers.

A roving comprising fibers made according to the instant disclosure was treated with a proprietary sizing composition and impregnated with an epoxy resin (Hexion L135 manufactured by Hexion, Inc.) and cured with Hexion LH137 according to the manufacturer's instructions. Impregnating the glass fiber produced from the compositions disclosed and described herein provides for glass fibers having an impregnated strand tensile modulus of about 85 GPa, greater than 87 GPa, greater than 89 GPa, and 90 GPa or greater. In one example, an exemplary impregnated strand (Example 5) was tested as specified in ASTM D2343 to determine its tensile strength and modulus. The data in Table 3 demonstrates the improved strength and modulus of an impregnated strand composite using the glass fiber compositions disclosed herein.

**TABLE 3. Impregnated Strand testing per ASTM D2343.**

| | |
|---|---|
| Fiber Diameter (um) | 14 |
| Tensile Strength (MPa) | 3070 |
| Tensile Modulus (GPa) | 90 |

The above has been described both generically and with regard to specific embodiments. Although the instant disclosure has been set forth in what is believed to be the preferred embodiments, a wide variety of alternatives known to those of skill in the art can be selected within the generic disclosure. Other advantages and obvious modifications of the instant disclosure will be apparent to the artisan from the above description and further through practice of the instant disclosure. The instant disclosure is not otherwise limited, except for the recitation of the claims set forth below.

## Claims

1. A glass composition comprising:
between 56 to 61 weight percent SiO₂;
between 16 to 23 weight percent Al₂O₃, wherein the weight percent ratio of SiO₂/Al₂O₃ is between 2 to 4;
between 8 to 12 weight percent MgO;
between 6 to 10 weight percent CaO, wherein the weight percent ratio of MgO/CaO is between 0.7 to 1.5;
between 0.7 to 2 weight percent Na₂O;
less than 1 weight percent Li₂O; and
total residual transition metal oxides of less than 2 weight percent.

2. The glass composition of claim 1, wherein the weight percent SiO₂ is between 57.5 to 60.5.

3. The glass composition of claim 1, wherein the weight percent Al₂O₃ is between 17.3 to 21.5.

4. The glass composition of claim 1, wherein the weight percent MgO is between 9.0 to 11.3;
or wherein the weight percent of CaO is between 7.5 to 9.7.

5. The glass composition of any one of claims 1-4, wherein the weight percent ratio of SiO₂/ Al₂O₃ is between 2.7 to 3.5;
or wherein the weight percent ratio of MgO/CaO is between 1.0 to 1.2.

6. The glass composition of any one of claims 1-4, wherein the glass composition is essentially lithium free;
or wherein the glass composition is essentially potassium free;
or wherein the glass composition is essentially lithium free and potassium free.

7. The glass composition of any one of claims 1-4, consisting essentially of:
between 57.5 to 60.5 weight percent SiO₂;
between 17.3 to 21.5 weight percent Al₂O₃, wherein the weight percent ratio of SiO₂/ Al₂O₃ is between 2.7 to 3.5;
between 9.0 to 11.3 weight percent MgO;
between 7.5 to 9.7 weight percent CaO; wherein the weight percent ratio of MgO/CaO is between 1.0 to 1.2; and
less than 0.5 weight percent Li₂O.

8. The glass composition of any one of claims 1-4, wherein the glass composition has a liquidus temperature of between 1240°C and 1270°C and a T₂ of less than 1550°C.

9. A glass fiber consisting essentially of a glass composition as defined in claim 1 or 7.

10. The glass fiber of claim 9, wherein the glass fiber has a pristine fiber strength of at least 4400 MPa;
or wherein the glass fiber has a Young's modulus of at least 90 GPa.

11. A process for providing continuous, manufacturable, high modulus glass fibers in a glass melter, the process comprising the steps of:
providing a composition as defined in claim 1 or 7 to a melting zone of a glass melter,
heating the composition to a forming temperature in excess of the liquidus temperature of a resulting glass to form a fiberizable molten glass; and
continuously fiberizing said molten glass whereby a manufacturable high modulus glass fiberization process is sustained.

12. The process of claim 11, wherein the composition has a fiberizing temperature of less than 1375°C, and a delta-T (ΔT) of at least 70°C;
or wherein the glass fiber produced from said composition has a pristine fiber strength of at least 4400 MPa.

13. The process of claim 11, further comprising impregnating the glass fiber produced from said composition, wherein the glass fiber has an impregnated strand tensile modulus of greater than 85 GPa, and preferably wherein the glass fiber has an impregnated strand tensile modulus of 90 GPa.

14. A fiberglass reinforced article comprising: glass fibers comprising a composition as defined in claim 1 or 7 and a matrix material.

15. The fiberglass reinforced article of claim 14, wherein said fiberglass reinforced article is a wind turbine blade;
or wherein the glass fibers of the fiberglass reinforced article have an impregnated strand tensile modulus of greater than 85 GPa;
or wherein the glass fibers of the fiberglass reinforced article have an impregnated strand tensile modulus of 90 GPa.

## Patentansprüche

1. Glaszusammensetzung, umfassend:
zwischen 56 und 61 Gewichtsprozent SiO₂;
zwischen 16 und 23 Gewichtsprozent Al₂O₃, wobei das Gewichtsprozentverhältnis von SiO₂/Al₂O₃ zwischen 2 und 4 ist;
zwischen 8 und 12 Gewichtsprozent MgO;
zwischen 6 und 10 Gewichtsprozent CaO, wobei das Gewichtsprozentverhältnis von MgO/CaO zwischen 0,7 und 1,5 ist;
zwischen 0,7 und 2 Gewichtsprozent Na₂O;
weniger als 1 Gewichtsprozent Li₂O; und
restliche Übergangsmetalloxide insgesamt von weniger als 2 Gewichtsprozent.

2. Glaszusammensetzung nach Anspruch 1, wobei der SiO₂-Gewichtsprozentanteil zwischen 57,5 und 60,5 ist.

3. Glaszusammensetzung nach Anspruch 1, wobei der Al₂O₃-Gewichtsprozentanteil zwischen 17,3 und 21,5 ist.

4. Glaszusammensetzung nach Anspruch 1, wobei der MgO-Gewichtsprozentanteil zwischen 9,0 und 11,3 ist;
oder wobei der CaO-Gewichtsprozentanteil zwischen 7,5 und 9,7 ist.

5. Glaszusammensetzung nach einem der Ansprüche 1 bis 4, wobei das Gewichtsprozentverhältnis von SiO₂/Al₂O₃ zwischen 2,7 und 3,5 ist;
oder wobei das Gewichtsprozentverhältnis von MgO/CaO zwischen 1,0 und 1,2 ist.

6. Glaszusammensetzung nach einem der Ansprüche 1 bis 4, wobei die Glaszusammensetzung im Wesentlichen lithiumfrei ist;
oder wobei die Glaszusammensetzung im Wesentlichen kaliumfrei ist;
oder wobei die Glaszusammensetzung im Wesentlichen lithiumfrei und kaliumfrei ist.

7. Glaszusammensetzung nach einem der Ansprüche 1 bis 4, die im Wesentlichen aus Folgendem besteht:
zwischen 57,5 und 60,5 Gewichtsprozent SiO₂;
zwischen 17,3 und 21,5 Gewichtsprozent Al₂O₃, wobei das Gewichtsprozentverhältnis von SiO₂/Al₂O₃ zwischen 2,7 und 3,5 ist;
zwischen 9,0 und 11,3 Gewichtsprozent MgO;
zwischen 7,5 und 9,7 Gewichtsprozent CaO; wobei das Gewichtsprozentverhältnis von MgO/CaO zwischen 1,0 und 1,2 ist; und
weniger als 0,5 Gewichtsprozent Li₂O.

8. Glaszusammensetzung nach einem der Ansprüche 1 bis 4, wobei die Glaszusammensetzung eine Liquidustemperatur zwischen 1240 °C und 1270 °C und eine T₂ von weniger als 1550 °C hat.

9. Glasfaser, die im Wesentlichen aus einer Glaszusammensetzung nach Anspruch 1 oder 7 besteht.

10. Glasfaser nach Anspruch 9, wobei die Glasfaser eine ursprüngliche Faserfestigkeit von wenigstens 4400 MPa hat
oder wobei die Glasfaser einen Elastizitätsmodul von wenigstens 90 GPa hat.

11. Prozess zum Bereitstellen von kontinuierlichen, herstellbaren Glasfasern mit hohem E-Modul in einer Glasschmelzwanne, wobei der Prozess die folgenden Schritte aufweist:
Geben einer Zusammensetzung nach Anspruch 1 oder 7 in eine Schmelzzone einer Glasschmelzwanne,
Erhitzen der Zusammensetzung auf eine Formungstemperatur über der Liquidustemperatur eines resultierenden Glases zum Bilden einer zu Fasern ziehbaren Glasschmelze und
kontinuierliches Ziehen von Fasern aus der genannten Glasschmelze, so dass ein Prozess zum Ziehen herstellbarer Glasfasern mit hohem Elastizitätsmodul beibehalten wird.

12. Prozess nach Anspruch 11, wobei die Zusammensetzung eine Faserziehtemperatur von weniger als 1375 °C und eine Delta-T (ΔT) von wenigstens 70 °C hat
oder wobei die aus der genannten Zusammensetzung erzeugte Glasfaser eine ursprüngliche Faserfestigkeit von wenigstens 4400 MPa hat.

13. Prozess nach Anspruch 11, der ferner das Imprägnieren der aus der genannten Zusammensetzung erzeugten Glasfaser aufweist, wobei die Glasfaser einen Zugmodul des imprägnierten Strangs von mehr als 85 GPa hat oder vorzugsweise wobei die Glasfaser einen Zugmodul des imprägnierten Strangs von 90 GPa hat.

14. Glasfaserverstärkter Artikel, umfassend: Glasfasern, die eine Zusammensetzung nach Anspruch 1 oder 7 umfassen, und ein Matrixmaterial.

15. Glasfaserverstärkter Artikel nach Anspruch 14, wobei der genannte glasfaserverstärkte Artikel ein Windenergieanlagenrotorblatt ist
oder wobei die Glasfasern des glasfaserverstärkten Artikels einen Zugmodul des imprägnierten Strangs von mehr als 85 GPa haben
oder wobei die Glasfasern des glasfaserverstärkten Artikels einen Zugmodul des imprägnierten Strangs von 90 GPa haben.

## Revendications

1. Composition de verre comprenant :
entre 56 et 61 pour cent en poids de SiO₂ ;
entre 16 et 23 pour cent en poids d'Al₂O₃, le rapport des pourcentages en poids de SiO₂/Al₂O₃ étant entre 2 et 4 ;
entre 8 et 12 pour cent en poids de MgO ;
entre 6 et 10 pour cent en poids de CaO, le rapport des pourcentages en poids de MgO/CaO étant entre 0,7 et 1,5 ;
entre 0,7 et 2 pour cent en poids de Na₂O ;
moins de 1 pour cent en poids de Li₂O ; et
un résidu total d'oxydes métalliques de transition de moins de 2 pour cent en poids.

2. Composition de verre selon la revendication 1, dans laquelle le pourcentage en poids de SiO₂ est entre 57,5 et 60,5.

3. Composition de verre selon la revendication 1, dans laquelle le pourcentage en poids de Al₂O₃ est entre 17,3 et 21,5.

4. Composition de verre selon la revendication 1, dans laquelle le pourcentage en poids de MgO est entre 9,0 et 11,3 ;
ou dans laquelle le pourcentage en poids de CaO est entre 7,5 et 9,7.

5. Composition de verre selon l'une quelconque des revendications 1 à 4, le rapport des pourcentages en poids de SiO₂/Al₂O₃ étant entre 2,7 et 3,5 ;
ou dans laquelle le rapport des pourcentages en poids de MgO/CaO est entre 1,0 et 1,2.

6. Composition de verre selon l'une quelconque des revendications 1 à 4, la composition de verre étant essentiellement dépourvue de lithium ;
ou la composition de verre étant essentiellement dépourvue de potassium ;
ou la composition de verre étant essentiellement dépourvue de lithium et de potassium.

7. Composition de verre selon l'une quelconque des revendications 1 à 4, consistant essentiellement en :
entre 57,5 et 60,5 pour cent en poids de SiO₂ ;
entre 17,3 et 21,5 pour cent en poids de Al₂O₃, le rapport des pourcentages en poids de SiO₂/Al₂O₃ étant entre 2,7 et 3,5 ;
entre 9,0 et 11,3 pour cent en poids de MgO ;
entre 7,5 et 9.7 pour cent en poids de CaO ; le rapport des pourcentages en poids de MgO/CaO étant entre 1,0 et 1,2 ; et
moins de 0,5 pour cent en poids de Li₂O.

8. Composition de verre selon l'une quelconque des revendications 1 à 4, la composition de verre ayant une température de liquidus entre 1240 °C et 1270 °C et une T₂ de moins de 1550 °C.

9. Fibre de verre consistant essentiellement en une composition de verre telle que définie à la revendication 1 ou 7.

10. Fibre de verre selon la revendication 9, la fibre de verre ayant une résistance de fibre vierge d'au moins 4400 MPa ;
ou la fibre de verre ayant un module de Young d'au moins 90 GPa.

11. Processus de fourniture de fibres de verre continues, manufacturables, de module élevé dans un fondoir à verre, le processus comprenant les étapes de :
apport d'une composition telle que définie à la revendication 1 ou 7 dans une zone de fusion d'un fondoir à verre,
chauffage de la composition jusqu'à formation d'une température supérieure à la température de liquidus d'un verre résultant pour former un verre fondu fibérisable ; et
fibérisation continue dudit verre fondu, maintenant ainsi un processus de fibérisation de verre manufacturable à module élevé.

12. Processus selon la revendication 11, dans lequel la composition a une température de fibérisation de moins de 1375 °C, et un delta-T (ΔT) d'au moins 70 °C ;
ou dans lequel la fibre de verre produite à partir de ladite composition a une résistance de fibre vierge d'au moins 4400 MPa.

13. Processus selon la revendication 11, comprenant en outre l'imprégnation de la fibre de verre produite à partir de ladite composition, la fibre de verre ayant un module d'élasticité de brins imprégnés de plus de 85 GPa, et de préférence la fibre de verre ayant un module d'élasticité de brins imprégnés de 90 GPa.

14. Article renforcé par fibres de verre comprenant : des fibres de verre comprenant une composition telle que définie à la revendication 1 ou 7 et un matériau matriciel.

15. Article renforcé par fibres de verre selon la revendication 14, ledit article renforcé par fibres de verre étant une aube d'éolienne ;
ou dans lequel les fibres de verre de l'article renforcé par fibres de verre ont un module d'élasticité de brins imprégnés de plus de 85 GPa ;
ou dans lequel les fibres de verre de l'article renforcé par fibres de verre ont un module d'élasticité de brins imprégnés de 90 GPa.
